# EUROPEAN PATENT APPLICATION

(11) **EP 0 798 899 A1**
(43) Date of publication of application: **01.10.1997**
(21) Application number: 97200893.2
(22) Date of filing: 25.03.1997
(51) Int. Cl.: H04L 12/58

(54) **Method for the notification of items present in a server**

(30) Priority: 25.03.1996 NL 1002704
(71) Applicant: Koninklijke PTT Nederland N.V., 9726 AE Groningen (NL)
(72) Inventor: van Hulten , Wouter Martijn, 9723 AB Groningen (NL); Nieuwenhuis, Lambertus Johannes Maria, 9723 AB Groningen (NL)
(74) Representative: Beitsma, Gerhard Romano

(57) **Abstract**

Users whose PC is not permanently or frequently connected to an e⁻mail or other server (2, 13), do nevertheless want a quick message (notification) if there have arrived new items intended for them (messages, mail, news etc.) on the server. This is made possible by presenting notification messages to the users at a user terminal which is permanently capable of being activated from the communication network, such as telephone (9), fax, or pager. The items themselves may then be retrieved by the user at the server by means of the PC (10) or television receiver. Notification messages may be presented to the subscriber by calling up the latter and passing on a notification message in spoken form. If so desired, this may be done by way of a message server (11). A still further option is to include a notification sign or message in the dialling tone which is presented by a signalling server (12) of the communication network, to the subscriber as soon as the latter takes up the receiver.

## Description

### A. BACKGROUND OF THE INVENTION

The invention relates to a method for the notification of items present in a server.

It is known that a server, e.g., a network access server, notifies a user, who logs in with his/her terminal or PC, that there is new e⁻mail for said user (e⁻mail notification). Another option is that the user ⁻⁻after logging in⁻⁻ at the network server queries whether there still has arrived new mail.

In those cases, however, in which users are only relatively little connected to the server, the need is felt by said users to be notified, in one way or another, of the arrival of new messages.

The problem therefore is that users, who are not continuously or frequently connected to the server, nonetheless do want to be notified quickly if there have arrived new items intended for them (messages, mail, news) on the server.

### B. SUMMARY OF THE INVENTION

The invention is based on the insight that notification messages need not be transferred to the users by way of the same medium as the items in the server to which said notification messages relate. The invention comprises a method for the notification of items present in the server, with notification messages being presented to a user by way of a communication network and a first terminal permanently capable of being activated from said communication network. The items themselves, to which the notification messages relate, are capable of being retrieved by the user by means of a second terminal which is not, or not permanently, capable of being activated from the communication network. As a first terminal, there is now particularly considered a telephone set, fax machine or pager, i.e., subscriber terminals which are usually permanently accessible from the communication network. Below, for simplicity's sake the first terminal may be denoted as a telephone set, although other terminals are therefore eligible as well. As a second terminal, there is now particularly considered a PC. Also eligible is a TV receiver in the form of a teletex terminal. For presenting notification messages to the users, several options are possible:
- The server may directly activate (dial) the telephone set by way of the communication network, and present a notification message to it. In the event of use of a telephone set, the notification message in the server must first be converted, by means of data-voice conversion, into a message in "spoken" form. In the event of use of a fax machine, the notification message must be converted from data into a graphic format.
- The server may also, by way of the communication network, present a notification message to a second server, which presents said notification message to the telephone subscriber after the latter has dialled said second server. The (first) server may access the second server for transferring notification messages; conversely, the second server, either by way of the communication network or by way of another network, e.g., the Internet, may ⁻⁻periodically⁻⁻ access the (first) server to take over notification messages. It might be imagined that this could constitute a separate service to which e⁻mail users may subscribe.
- The server may also present a notification message to a server associated with the communication network, which in its turn presents a notification message to the telephone set as soon as the user activates his/her telephone set (takes up the receiver). In this connection, it might be considered to give off a special "dialling tone" ⁻⁻when the subscriber takes up his receiver⁻⁻ upon notification. Said special dialling tone may consist of "clicks" superimposed on the normal dialling tone, as this currently sometimes occurs in PABXs if a subscriber set for incoming calls is put through to another number. It is more sophisticated, prior to the normal dialling tone, to transmit a "spoken" notification message. Note that in this option the notification is therefore transmitted even before the subscriber has had to dial any telephone number.

The server may be a "network access server", as a result of which users may gain access to a network, by way of which electronic-mail messages may be exchanged. Nowadays, the Internet is a striking example of this. The items discussed then are the electronic-mail messages intended for the user, which are (temporarily) stored in such a server. Normally, a PC user is notified of the arrival of new e⁻mail messages in the server after a login has been effected on said server. The access server usually also serves to enable the users to exchange electronic news messages, organised in news groups to which users may subscribe. In this case, the items are the (new) news messages intended for the user.

The server, however, may also be a (general) message server, which is capable of transmitting information to users. The items are then formed by messages containing information intended for the user. In fact, the type of message is of no importance. There may be considered servers for ⁻⁻per subscription⁻⁻ providing specialised information. There may also be considered purely private information, such as information regarding bank balances etc.; modifications to the balance may then be notified to the user/client in the manner indicated above. A very different type of information is general information and advertising. These, too, may be brought to the attention of subscribers in the manner indicated.

The simplest method of notification is the one in which a notification message indicates only the number of items present in the server (for the user). More sophisticated is the method in which the notification messages comprise an indication of the contents of the items present in the server and intended for the user. In the event of advertising, the notification messages might be brief commercials, while the items themselves comprise more extensive information on the promoted wares. It will be obvious that the present invention ^{―} the announcement or notification of information stored in a server by way of telephone, fax or other terminals well-accessible by way of the communication network ^{―} offers interesting options for both small-scale and large-scale information distribution.

### C. EXEMPLARY EMBODIMENTS

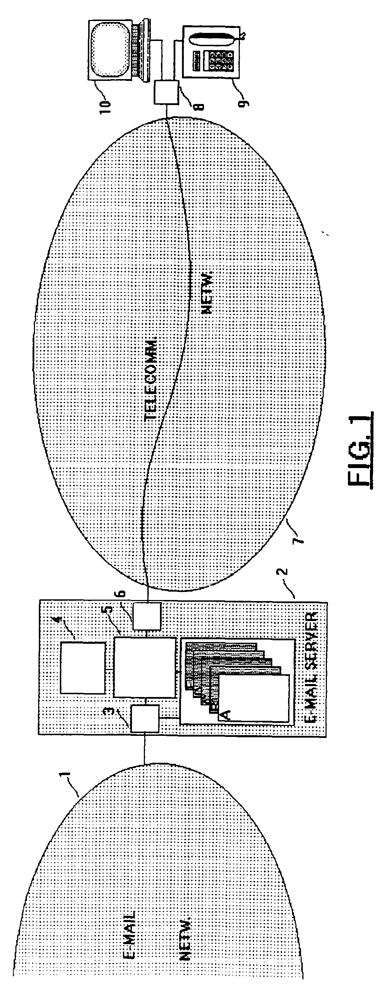

FIG. 1 schematically shows a first exemplary embodiment of the invention. To a network 1, by way of which electronic messages (e⁻mail) may be transmitted, there is connected a server 2. In the server, there may be stored e⁻mail messages intended for subscribers who make use of said server and have chosen domicile there for the purpose of receiving e⁻mail. E⁻mail messages, which are received by way of a network interface 3, are saved in a storage medium in separate subscriber directories, denoted in the figure by A, B, C etc. In accordance with the invention, after an electronic item of mail has been received by the server 2, this is notified, by means of a notification message, to the subscriber to whom said e⁻mail message is addressed. For completeness' sake it is still noted that an e⁻mail message is addressed by coupling the name of the addressee with the server on which the addressee has chosen domicile, e.g.: w.m.vanhulten@research.kpn.com, where the first portion is the subscriber name and the portion after the delimiter @ the name of the server on which the subscriber has chosen domicile. So far, it is customary that the server reports the presence of new mail as soon as the subscriber makes contact with the server. In those cases in which users are frequently connected with the server, e.g., in a business environment, this is a very acceptable method. In those cases, however ^{―} e.g., in the event of non-business use ^{―} in which relatively little use is made of the server, it is now possible, by means of the present invention, to notify the user, either directly or at a previously agreed point in time, of the presence of new mail. For this purpose, there is generated a "spoken" notification message for the user by a medium converter 4. Under control of the server control system 5, a network interface 6, by way of the public telecommunication network 7, dials the telephone set of the user, whereafter the user, once he has taken up the receiver, hears the notification message generated by the converter 4. Thereafter the subscriber himself may, at a later point in time if so desired, download the e⁻mail message from the server 2 with the help of his/her PC 10 and network interface 8, after connection has been made therewith by way of the telecommunication network 7. It should be noted that currently the PC is normally being considered as a terminal not capable, or at any rate not permanently capable, of being activated from the communication network, such in contrast to the telephone set and the fax machine and the like, which are after all almost permanently accessible and capable of being activated from the communication network. The point in time on which the server 2 transfers the notification message to the subscriber is previously set ⁻⁻by way of a voice-response protocol⁻⁻ by the subscriber in the server, to wit, in a portion of the server control system 5, with the help of his PC, or with the help of his telephone set.

If the notification message is to be sent not to a telephone set, but to a fax machine ⁻⁻which procedure may also be set in advance by the user or be derived from the fax protocol observed by the interface member 6⁻⁻ the notification message in the medium converter 4 is not converted into a "spoken" message, but into a message in (graphic) fax format. Likewise, notification messages may be converted into other formats, such as into a format suitable for transmission to pagers.

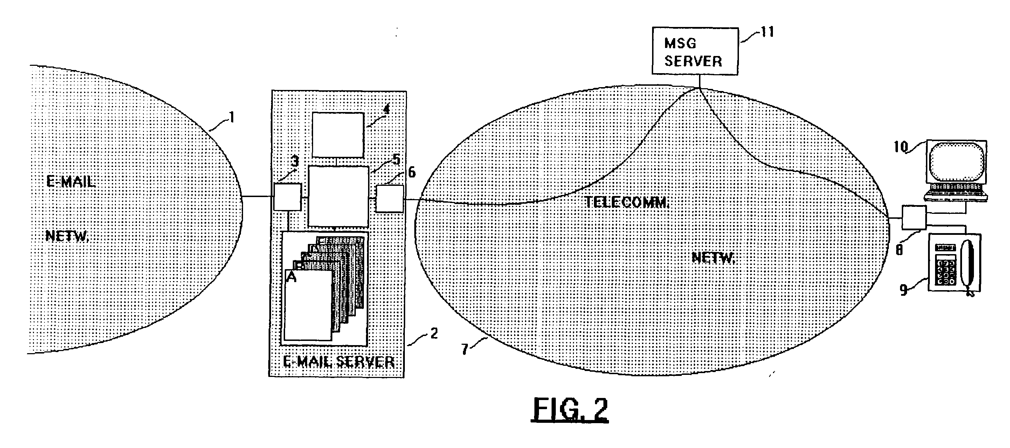

FIG. 2 shows a system which uses a somewhat different method of notification. Here, the notification message is not transmitted directly to the subscriber, but to a separate message server (notification server) 11. This may be a message server which, apart from notification messages from the e⁻mail server 2, also saves other messages intended for subscribers. The messages, and therefore also the notification messages, are retrieved by the subscriber, either by way of his/her telephone set or by way of his/her PC. As indicated earlier, upon transfer of notification messages the server 2 may take the initiative and activate the message server 11, or the message server 11 may periodically retrieve notification messages from the server 2. The latter retrieval will then take place on behalf of users who have a subscription to said "notification service" at said message server.

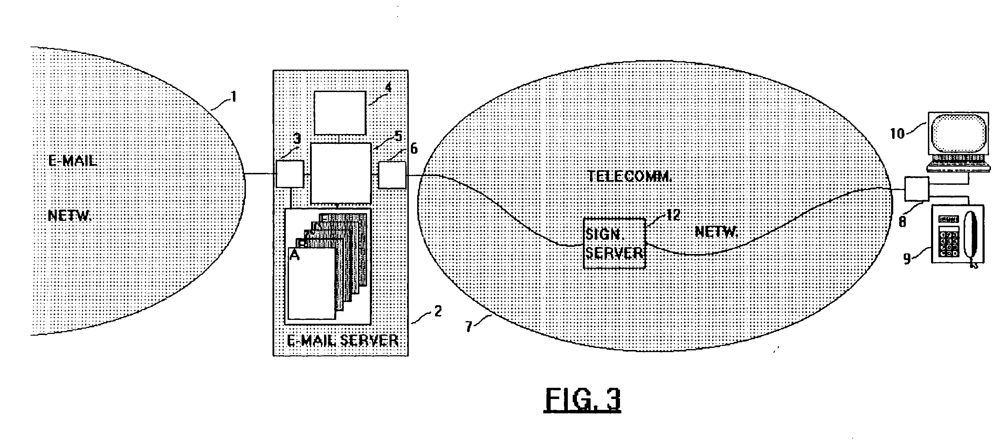

A still somewhat different method which may be used is the one in which the message server is connected to the signalling system of the communication network. If there are messages intended for the subscriber (including notification messages), the communication system gives off another "dialling tone" than the regular one. In FIG. 3, this is represented by a signalling server 12 responsible for transmission to telephone subscribers of a "dialling tone" after the receiver is taken up. It is assumed that the signalling server may be accessed by the e⁻mail server. If e⁻mail has arrived for a certain subscriber, there is transmitted a notification message to the signalling server. The latter is thereby set in such a manner that the telephone subscriber, as soon as the latter takes up the telephone receiver, is given a dialling tone which differs from the regular dialling tone, e.g., a dialling tone having superimposed "clicks". It is more sophisticated for the subscriber to get to hear an electronic "spoken" notification prior to the regular dialling tone. Said "spoken" message may be generated in the signalling server or in the e⁻mail server, and stored by the signalling server and "played" one or more times as soon as the subscriber takes up the receiver. The notification message is removed from the signalling server and the e⁻mail server as soon as the subscriber, by way of his/her PC, has retrieved the e⁻mail message to which the notification message relates, and his/her mailbox is empty again.

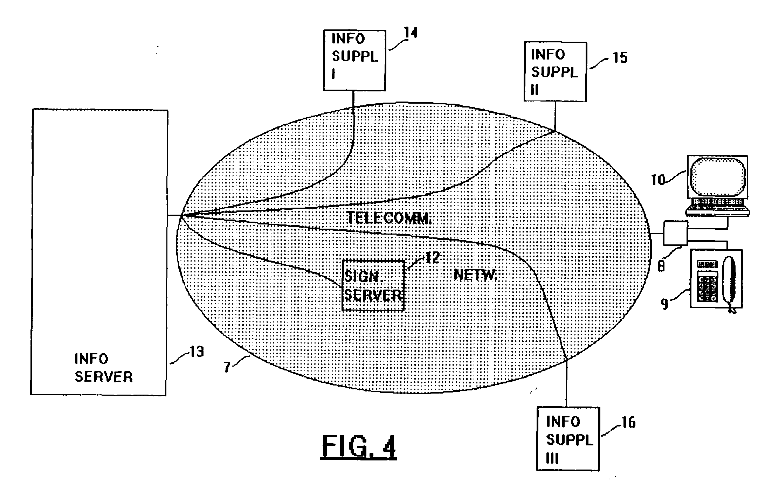

As already indicated above, the method according to the invention also relates to the notification (or announcement) of other messages" (items) than e⁻mail and news messages and the like. The method is also useful for the distribution of information of another kind, including commercials. Having said this, the concepts of messages, reports and the like also comprise all eligible forms of multimedia-formatted information. FIG. 4 schematically shows an architecture in which the method according to the invention, relating to the announcement (notification) of general-information items, may be carried out. The servers 14, 15 and 16 of a number of information suppliers provide, by way of the telecommunication network 7 (another network, such as the Internet, might serve just as well), information items, e.g., relating to new products or services marketed, new government measures or services etc., to an information service 13. The items may be intended for certain subscribers, or intended for all subscribers whose terminal (telephone, fax) is capable of being activiated (dialled) from the communication network 7. In this case, as a notification message there is preferably chosen a message having a brief indication of the contents of the items to be brought to the attention of the subscribers. Said brief indication of the contents, the notification message, is produced either by the information suppliers 14-15 or by the information "broker" 13, and subsequently presented to the signalling server 12. The notification message is converted, in the server 12, into the format capable of being processed by the subscriber terminal. Thus, a subscriber hears, as soon as he takes up the receiver, a notification message of the information items most recently included in the information server 13. Having said this, it should be obvious that the presentation of such notification messages, which after all serve primarily as "dialling tone" (or are an addition to said dialling tone) may at any moment be interrupted by the subscriber, namely, by dailling the desired telephone number. The entire information items themselves may be consulted by the subscriber with the help of his/her PC by dialling the information server 13. An option is to make more extensive information, i.e., more extensive than in the notification message, accessible by dialling an (abbreviated) telephone number (e.g., "#1"), as a result of which a connection is set up with the information server 13, which subsequently gives off ⁻⁻in the form of speech⁻⁻ more extensive information.

Finally it should be noted that, wherever the term (tele)communication network is used, this may not be restricted to, e.g., a telephony network. The actual type of network is completely unimportant in the framework of this invention.

## Claims

1. Method for the notification of items present in a server (2, 13), characterised in that notification messages are presented to a user by way of a communication network and a first terminal (9) permanently capable of being activated from said communication network.

2. Method according to claim 1, characterised in that the items, to which the notification messages relate, are capable of being retrieved by the user by means of a second terminal (10) which is not, or not permanently, capable of being activated from the communication network.

3. Method according to claim 1, characterised in that the server, for the notification of items in said server, activates the first terminal permanently capable of being activated by way of the communication network, and presents a notification message to said first terminal.

4. Method according to claim 1, characterised in that the server (2, 13), for the notification of items, activates a second server (11) and presents a notification message to it, which second server in its turn presents a notification message to the first terminal.

5. Method according to claim 1, characterised in that the server (2, 13) is periodically accessed by a second server (11) and activated, and transfers the notification messages to said second server, whereafter said second server in its turn presents a notification message, if present, to the first terminal.

6. Method according to claim 4 or 5, characterised in that said second server (11), if present, presents a notification message to the first terminal as soon as the user, by means of the first terminal, activates said second server by way of the communication network.

7. Method according to claim 4 or 5, characterised in that said second server (11), if a notification message is present, activates said first terminal and presents the notification message.

8. Method according to claim 1, characterised in that the server (2, 13), for the notification of items, presents a notification message to a second server (12) associated with the communication network, which second server in its turn presents a notification message to the first terminal as soon as the user activates said first terminal.

9. Method according to claim 1, characterised in that the first terminal is a telephone set.

10. Method according to claim 1, characterised in that the first terminal is a telefax machine.

11. Method according to claim 1, characterised in that the first terminal is a paging receiver.

12. Method according to claim 2, characterised in that the second terminal is a PC.

13. Method according to claim 2, characterised in that the second terminal is a television receiver.

14. Method according to claim 1, characterised in that the server is an access server for providing user access to a network, by way of which there may be exchanged electronic-mail messages, while said items are the electronic-mail messages intended for the user.

15. Method according to claim 1, characterised in that the server is an access server for providing user access to a network, by way of which there may be exchanged electronic news messages between subscribers to news groups, while said items are the news messages intended for the user.

16. Method according to claim 1, characterised in that the server is an information server for passing on information to users, while said items are the messages with information intended for the user.

17. Method according to claim 1, characterised in that the notification messages indicate the number of items present in the server and intended for the user.

18. Method according to claim 1, characterised in that the notification messages comprise an indication of the contents of the items present in the server and intended for the user.

19. Information server (2, 13), comprising means for receiving, storing and transferring information items intended for users, characterised by means for transferring, by way of a communication network, notification messages relating to information items intended for the users, to terminals (9) of said users, which are permanently capable of being activated from said communication network.

20. Message server (11), characterised by means for receiving notification messages relating to information items intended for users, from an information server (2, 13), as well as means for transferring, by way of a communication network, said notification messages to terminals (9) of said users, which are permanently capable of being activated from said communication network.

21. Signalling server (12), forming part of a communication network, comprising means for transferring system signals to user terminals connected to said communication network, characterised by means for receiving notification messages relating to information items intended for users, from an information server (2, 13), as well as means for presenting, as a system signal, a notification signal or message to the terminals (9) of said users after receiving, from the information server, notification messages for said users.
